# EUROPÄISCHE PATENTANMELDUNG

(11) **EP 4 082 476 A1**
(43) Veröffentlichungstag der Anmeldung: **02.11.2022**
(21) Anmeldenummer: 21171453.0
(22) Anmeldetag: 30.04.2021
(51) Int. Cl.: A61C 8/00, A61C 13/00, A61C 5/77

(54) **DENTALES IMPLANTATSYSTEM**

(71) Anmelder: VITA-ZAHNFABRIK H. Rauter GmbH & Co. KG, 79713 Bad Säckingen (DE)
(72) Erfinder: Märtin, Sabrina, 79418 Liel (DE); Prof. Dr. Dr. Fischer, Jens, 8805 Richterswill (CH)
(74) Vertreter: dompatent von Kreisler Selting Werner - Partnerschaft von Patent- und Rechtsanwälten mbB

(57) **Zusammenfassung**

Die vorliegende Erfindung betrifft ein dentales Implantatsystem umfassend ein Implantat und eine dentale Versorgung, wobei die dentale Versorgung einen maschinell eingebrachten Kanal aufweist. Weiterhin betrifft die vorliegende Erfindung einen Rohling zur Herstellung der dentalen Versorgung sowie ein Verfahren zu dessen Herstellung und ein Verfahren zur Herstellung des dentalen Implantatsystems.

## Beschreibung

Die vorliegende Erfindung betrifft ein dentales Implantatsystem umfassend ein Implantat und eine dentale Versorgung, wobei die dentale Versorgung einen maschinell eingebrachten Kanal aufweist. Weiterhin betrifft die vorliegende Erfindung einen Rohling zur Herstellung der dentalen Versorgung sowie ein Verfahren zu dessen Herstellung und ein Verfahren zur Herstellung des dentalen Implantatsystems.

Die Implantologie als Teilgebiet der Zahnheilkunde befasst sich mit dem Einsetzen, oder der Insertion, von Zahnimplantaten in den Kieferknochen. Die Implantate werden in der Regel als Teil eines Systems aus Implantat und dentaler Versorgung verwendet und übernehmen die Funktion einer künstlichen Zahnwurzel. Die Implantatsysteme umfassen üblicherweise einen enossalen Teil zur Verankerung des Implantats im Kieferknochen und ein Abutment, das aus dem Kieferknochen herausragt und zur Aufnahme der dentalen Versorgung, beispielsweise einer Krone, dient.

Im Rahmen der Wiederherstellung der Kaufunktion und der Ästhetik wird in der Regel zunächst das Implantat in den Kieferknochen eingesetzt und nach einer entsprechenden Einheilungszeit wird die dentale Versorgung auf das Abutment aufgesetzt und mit diesem verbunden. Zur Befestigung der dentalen Versorgung auf dem Abutment stehen verschiedene Möglichkeiten zur Verfügung. So kann beispielsweise bei metallischen Implantaten die dentale Versorgung aufgeschraubt werden. Dies hat den Vorteil, dass im Fall von Komplikationen oder Beschädigungen die dentale Versorgung einfach wieder abgeschraubt werden kann. Nachteilig ist allerdings, dass durch die Verschraubung Nischen und Spalten in der Mundhöhle entstehen, in die sich Bakterien einnisten können, die wiederum im das Implantat umgebende Gewebe zu Entzündungen führen können, die zu einem Knochenabbau führen. Dieser Vorgang wird allgemein als Periimplantitis bezeichnet, die im schlimmsten Fall zum Verlust des Implantats führen kann.

Bei einteiligen Implantaten, bei denen der enossale Teil und das Abutment einteilig ausgestaltet sind, wird die dentale Versorgung mit Hilfe von dentalen Befestigungsmitteln, beispielsweise dentalem Zement, auf dem Abutment fixiert. Dies hat den Vorteil, dass keine offenen Spalten zwischen Abtument und der dentalen Versorgung entstehen und Passungenauigkeiten zwischen Abutment und dentaler Versorgung ausgeglichen werden können. Diese Art der Befestigung wird insbesondere bei keramischen Implantaten wegen ihrer Sprödigkeit und der damit verbundenen Frakturanfälligkeit eingesetzt. Allerdings lässt sich auch durch diese Methode die Gefahr der Periimplantitis nicht ganz unterbinden.

Zwar kann der zwischen Abutment und dentaler Versorgung entstehende Spalt mit dentalem Zement abgedichtet werden, was allerdings den Nachteil mit sich bringt, dass mit einem Überschuss an Zement gearbeitet werden muss, um das vollständige Auffüllen des Zwischenraums zwischen Abutment und dentaler Versorgung zu garantieren. Der überschüssige Zement quillt am unteren Ende der dentalen Versorgung aus dem zwischen Abutment und Versorgung bestehenden Spalt heraus und muss entfernt werden. Da der Rand der dentalen Versorgung meist unter dem Niveau des Zahnfleischs liegt, ist die Zugänglichkeit, wenn überhaupt, nur eingeschränkt gegeben und das Entfernen des überschüssigen Zements nur schwer bis gar nicht möglich. Der überschüssige Zement, der gezwungenermaßen in der Mundhöhle verbleibt, kann zu einer lokalen Entzündung und Bakterienbesiedlung führen, womit auch hier die Gefahr einer Periimplantitis und dadurch bedingt eines Verlusts des Implantats besteht.

Der Stand der Technik bietet einige Vorschläge, wie dem oben beschriebenen Problem begegnet werden kann.

DE 10 2007 018 453 betrifft ein aus einem Implantat und einer Suprastruktur, wie beispielsweise einer Krone oder Brücke, bestehendes Zahnimplantatsystem. Das Implantat ist aus einem Stück gefertigt und die Suprastruktur ist ganzflächig mit dem transgingivalen Implantatkopf verbunden und zusätzlich mit einem prothetischen Aufbaustift am Implantat befestigt. Durch die angepasste Oberflächenstruktur des Implantates soll ein vollständiges Verwachsen im enossalen und transgingivalen Bereich ermöglicht werden, wodurch das Entstehen von Zahnfleischtaschen verhindert werden soll. Nach Aussage der Druckschrift können durch die beschriebene Konstruktion keine Mikrobewegungen auftreten und es ist eine optimale Kräfteverteilung gewährleistet.

US 2006/0014120 beschreibt ein biofunktionales Zahnimplantat umfassend einen Wurzelbereich zum Befestigen im Kiefer des Patienten, durch den sich in Längsrichtung ein Kanal erstreckt; ein flexibles Abutment, das oben aus dem Wurzelbereich herausragt und einen sich in Längsrichtung durch das Abutment erstreckenden Kanal aufweist, der mit dem Kanal im Wurzelbereich ausgerichtet ist, einen Kronenbereich, der das flexible Abutment umgibt und einen Abutmentpfosten, der sich durch den Kronenbereich in den sich in Längsrichtung erstreckenden Kanal des Wurzelbereichs und des flexiblen Abutments erstreckt und eine nach außen gerichtete Kraft gegen das flexible Abutment erzeugt, durch die das flexible Abutment gegen den Kronenbereich gedrückt wird, wodurch dieser wiederum auf dem Wurzelbereich gehalten wird. Auf diese Weise soll es möglich sein, auf herkömmliche Schrauben oder Ähnliches zu verzichten.

US 2016/0338802 offenbart eine Dentalprothese mit einem Überbau und einem Implantat, das zur Integration in den Knochen angepasst ist, die wechselseitig mittels einer Schraube, einem Einsetzelement, das aus einem Dämpfungsmaterial besteht und zwischen den Kopplungsflächen des Überbaus beziehungsweise des Implantats angeordnet ist, und einer Kappe gefügt sind, wobei das Einsetzelement eine ringförmige Basis, die zum Anordnen zwischen den Flächen geeignet ist, ein Profil, das mit dem Überbau in Eingriff steht und einen Gewindeabschnitt zum Eingriff mit der Kappe aufweist, die auch mit einem Gewinde versehen ist, um den Überbau an dem Einsatz zu blockieren, wobei die Schraube den Einsatz an dem Implantat fixiert.

Die im Stand der Technik beschriebenen Lösungsansätze weisen den Nachteil auf, dass keiner davon einen Zementüberschuss sicher vermeidet und so die Gefahr der Periimplantitis weiter besteht. Erschwerend kommt hinzu, dass der zur Fixierung der dentalen Versorgung verwendete Zement gleichzeitig für eine gleichmäßige Kraftverteilung innerhalb der dentalen Versorgung sorgen und etwaige Passungenauigkeiten ausgleichen soll, so dass eine Reduzierung der Menge an Zement, um ein Austreten zu verhindern, nicht in Frage kommt.

D. Patel et al. schlagen in ihrem Artikel "An analysis of the effect of a vent hole on excess cement expressed at the crwon-abutment margin for cement-retained implant crowns" in Journal of Prosthodontics, 2009, 18, 54-59, vor, die dentale Versorgung mit einem Abflussloch zu versehen, damit der überschüssige Zement nicht am Rand der Versorgung, sondern durch den Abfluss austreten kann. So beschreiben beispielsweise L.K. Zaugg et al. in "The effect of crown venting orprecementing of CAD/CAM-constructed all-ceramic crowns luted on YTZ implants on moarginal zement excess", erschienen in Clin Oral Impl Res. 2018, 29, 82-90, dass dies eine effektive Methode zur Vermeidung von Zementüberschuss beim Befestigen von Kronen auf einteiligen Keramikimplantaten darstellen kann. Dieser Ansatz weist allerdings den Nachteil auf, dass das Abflussloch von Hand nach Fertigstellung der Versorgung eingebracht werden muss, was einen zusätzlichen und komplizierten Arbeitsschritt erfordert und eine Vorschädigung des Materials zur Folge haben kann.

Vor diesem Hintergrund ist es die Aufgabe der vorliegenden Erfindung, ein dentales Implantatsystem zur Verfügung zu stellen, das die Gefahr einer durch Zementüberschuss ausgelösten Periimplantits verringert und gleichzeitig eine gleichmäßige Kraftverteilung in dem System erreicht.

Es wurde überraschend gefunden, dass diese Aufgabe durch ein dentales Implantatsystem gemäß der vorliegenden Erfindung gelöst wird.

Daher ist ein erster Gegenstand der vorliegenden Erfindung ein dentales Implantatsystem umfassend
a) ein Implantat mit einem enossalen Teil zur Verankerung in einem Kieferknochen und ein Abutment zur Aufnahme einer dentalen Versorgung; und
b) eine dentale Versorgung mit einer Ausnehmung zur Aufnahme des Abutments,
wobei die dentale Versorgung einen maschinell eingebrachten Kanal aufweist, der die Ausnehmung in der dentalen Versorgung mit einer Außenfläche der dentalen Versorgung verbindet.

Das erfindungsgemäße Implantatsystem erlaubt es, dass der normalerweise zwischen Abutment und dentaler Versorgung auftretende Spalt mit Zement verschlossen wird und damit eine Spaltbildung als Voraussetzung für das Einnisten von Bakterien verhindert wird. Vorteilhafter Weise kann der überschüssige Zement durch den Kanal abgeleitet werden und steht damit als Entzündungsquelle nicht mehr zur Verfügung. Durch das maschinelle Einbringen des Kanals wird sichergestellt, dass das Material der Versorgung nicht vorgeschädigt wird und so keine erhöhte Frakturgefahr bei der Handhabung der dentalen Versorung besteht. Durch das maschinelle Einbringen des Kanals weist die Kanalinnenwandung, im Gegensatz zur manuellen Fertigung, eine gerade und glatte Oberfläche auf, die frei ist von bearbeitungsbedingten Hinterschnitten, wodurch ein Aussfließen des überschüssigen Zements oder anderer Verbundmaterialien erleichtert wird.

In einer bevorzugten Ausführungsform ist die Innenkontur der Ausnehmung kongruent zur Außenkontur des Abutments.

Das im Rahmen des erfindungsgemäßen Implantatsystems verwendete Implantat kann sowohl einteilig als auch zweiteilig ausgebildet sein. Als zweiteilige Implantate werden solche mit einer lösbaren Verbindung zwischen dem enossalen Teil und dem Abutment verstanden. So kann beispielsweise das Abutment mit Hilfe einer Schraube an dem enossalen Teil des Implantats befestigt werden. Als einteilig ausgebildete Implantate werden solche bezeichnet, bei denen der enossale Teil und das Abutment des Implantats aus einem Stück gefertigt sind und entsprechend nicht voneinder getrennt werden können. Die Verwendung einteilig ausgebildeter Implantate bietet den Vorteil, dass diese keine weiteren Übergänge aufweisen und so weniger Angriffspunkte für eine bakterielle Besiedelung bieten. Dadurch kann die Gefahr einer Periimplantits weiter gesenkt werden. Daher ist eine Ausführungsform des erfindungesgemäßen Implantatsystem bevorzugt, in der Implantat einteilig ausgebildet ist.

Der Kanal in der dentalen Versorgung des erfindungsgemäßen Implantatsystem ist insbesondere dafür vorgesehen, überschüssiges Verbundmaterial, das zum Befestigen der dentalen Versorgung auf dem Abutment verwendet wird, abzuleiten. Entsprechend sollte der Kanal einen Durchmesser aufweisen, der geeignet ist, das überschüssige Verbundmaterial, wie dentalen Zement, abzuleiten ohne die mechanische Stabilität der dentalen Versorung zu beeinträchtigen. Daher ist eine Ausführungsform bevorzugt, in der der Kanal einen Durchmesser von 0,5 bis 2mm, vorzugsweise 0,7 bis 1 mm aufweist.

An eine dentale Versorung werden in der Regel hohe ästhetische Anforderungen gestellt. Daher ist eine Ausführungsform bevorzugt, in der es sich bei dem Kanal um einen innenliegenden Kanal handelt. Durch diese Ausführungsform wird das ästhetische Erscheinungsbild der dentalen Versorgung nicht beeinträchtigt.

Durch das Vorsehen eines Kanal in der dentalen Versorgung weist diese entsprechend in ihrer Oberfläche ein Loch auf, das die Austrittsöffnung des Kanals bildet. Zwar kann das Loch nach Anbringen der dentalen Versorgung verschlossen werden. Um eine Beeinträchtigung der optischen Eigenschaften der dentalen Versorgung zu vermeiden, ist jedoch eine Ausführungsform des erfindungsgemäßen Implantatsystems bevorzugt, in der der Austritt des Kanals oralseitig an der dentalen Versorgung angebracht ist.

Für das erfindungsgemäße Implantatsystem können die gängigen Materialien für dentale Implante verwendet werden. In der Praxis haben sich vor allem Metalle und keramische Materialien als geeignet erwiesen. Daher ist eine Ausführungsform bevorzugt, in der das Implantatsystem ein Material umfasst oder aus diesen besteht, das aus der Gruppe der Metalle und keramischen Materialien ausgewählt ist. Aus der Gruppe der Metalle sind insbesondere Titan und seine Legierungen bevorzugt, während aus der Gruppe der keramischen Materialien insbesondere Zirkoniumoxid und Mischungen enthaltend Zirkoniumoxid bevorzugt sind. Als besonders bevorzugtes Material wird mit Yttriumoxid stabilisiertes Zirkoniumoxid eingesetzt.

Das erfindungsgemäße Implantatsystem zeichnet sich insbesondere dadurch aus, dass der in der dentalen Versorgung vorgesehene Kanal maschinell eingebracht wird, also eine aufwendige und komplizierte manuelle Einbringung in die fertige Versorgung vermieden wird. Zu diesem Zweck ist ein weiterer Gegenstand der vorliegenden Erfindung ein Rohling zur Herstellung einer dentalen Versorgung, vorzugweise einer dentalen Versorgung wie sie in dem erfindungsgemäßen Implantantsystem verwendet wird, wobei der Rohling eine Ausnehmung zur Aufnahme eines Abutments eines Zahnimplantats und einen Kanal aufweist, der die Ausnehmung mit einer Außenfläche des Rohlings verbindet.

In der Regel folgt die Außenkontur eines Abutments einer standardisierten Form, so dass auch bei Vorfertigung der Ausnehmung in der dentalen Versorgung eine hohe Passgenauigkeit mit dem Abutment erzielt werden kann. Daher ist eine Ausführungsform bevorzugt, in der die Innenkontur der Ausnehmung kongruent zur Außenkontur eines Abutments ist.

Der Rohling gemäß der vorliegenden Erfindung sollte bevorzugt aus einem Material bestehen, dass sich mittels der gängigen Werkzeuge und Verfahren bearbeiten lässt, aber gleichzeitig über eine mechanische Stabilität verfügen, die den beim Kauvorgang auftretenten Kräfte standhalten kann. In einer bevorzugten Ausführungsform besteht der Rohling daher aus einem Material oder umfasst dieses, das aus der Gruppe ausgewählt ist, die aus Feldspatkeramik, Glaskeramik, Zirkoniumoxid, Kunststoff-Keramik-Verbundwerkstoff, Kunststoffen und Hybridkeramik besteht.

Ein weiterer Gegenstand der vorliegenden Erfindung ist ein Verfahren zur Herstellung einer dentalen Versorgung, insbesondere einer dentalen Versorgung, wie sie in dem erfindungsgemäßen Implantatsystem verwendet wird. Das Verfahren umfasst die folgenden Schritte:
i) Erfassen der oralen Situation eines Patienten;
ii-1) Bereitstellen eines Rohlings gemäß der vorliegenden Erfindung;
iii-1) Maschinelles Bearbeiten des Rohling auf Basis der unter i) ermittelten Daten unter Erhalt der dentalen Versorgung oder
ii-2) Bereitstellen eines Rohlings zur Herstellung einer dentalen Versorgung;
iii-2) Maschinelles Bearbeiten des Rohlings auf Basis der unter i) ermittelten Daten unter Erhalt der dentalen Versorgung, wobei die dentale Versorgung eine Ausnehmung zur Aufnahme eines Abutments eines Zahnimplantats aufweist und das maschinelle Bearbeiteten das Einbringen eines Kanals in die dentale Versorgung umfasst, der die Ausnehmung mit einer Außenfläche der Versorgung verbindet.

Vorzugsweise umfasst das maschinelle Bearbeiten des Rohlings das Einbringen der Ausnehmung derart, dass deren Innenkontur kongruent zur Außenkontur eines Implantat-Abutments ist.

Im Rahmen des erfindungsgemäßen Verfahrens kann die orale Situation des Patienten analog, also mit Hilfe von Gebissabformungen, oder aber digital mit Hilfe von Kameras erfasst werden. Für den Fall, dass die orale Situation klassisch mittels Gebissabformungen ermittelt wird, ist es bevorzugt, dass diese Daten digitalisiert werden. Die bei der Erfassung der oralen Situation des Patienten ermittelten Daten dienen als Vorlage für die Erstellung der dentalen Versorgung. Um eine möglichst genaue Einpassung der dentalen Versorgung in das bestehende Zahnschema zu erreichen, umfasst das erfindungsgemäße Verfahren in einer bevorzugten Ausführungsform weiterhin das Digitalisieren der oralen Situation des Patienten und Erstellen eines virtuellen Modells, das virtuelle Positionieren des Implantats, die Überlagerung des virtuellen Modells der oral Situation mit den CAD-Daten des Abutments des Implantats und die virtuelle Positionierung des virtuellen Modells der dentalen Versorgung in einem virtuellen Rohling vor. Die Positionierung des virtuellen Modells der dentalen Versorgung in dem virtuellen Rohling erfolgt vorzugsweise entsprechend so, dass der in der dentalen Versorgung vorgesehene Kanal die Ausnehmung in der dentalen Versorgung mit einer ihrer Außenflächen verbindet und die Austrittsöffnung in der Außenfläche oralseitig zu liegen kommt.

Die maschinelle Bearbeitung des Rohlings erfolgt entsprechend auf Basis der so ermittelten CAD-Daten. In einer weiterhin bevorzugten Ausführungsform erfolgt die Bearbeitung des Rohlings mittels CAD/CAM-Verfahren. Auf diese Weise ist gewährleistet, dass die Versorgung sicher auf dem Abutment sitzt, dass die Versorgung den Durchtritt durch die Schleimhaut anatomisch ausformt und dass die Versorgung eine ausreichende Wandstärke aufweist. Ein weiterer Vorteil des erfindungsgemäßen Verfahrens ist, dass eine direkte Behandlung des Patienten am Behandlungsstuhl in einer Sitzung, eine sogenannte chair-side Behandlung, möglich ist, ohne dass zeitliche Verzögerungen auftreten, wie sie entstehen, wenn die Daten an ein zahntechnisches Labor übermittelt werden müssen, in dem dann die dentale Versorgung hergestellt wird.

In einer besonders bevorzugten Ausführungsform umfasst das Verfahren die folgenden Schritte:
a) Bereitstellen eines Rohlings der vorliegenden Erfindung:
b) Modellieren der dentalen Versorgung, mit einer Ausnehmung zur Aufnahme eines Implantant-Abutments und einem Kanal, der die Ausnehmung mit einer Außenseite der Versorgung verbindet, mittels CAD;
c) Schleifen oder Fräsen der Versorgung aus dem Rohling und Bohren des Kanals entsprechend dem virtuellen Modell aus Schritt b);
d) Gegebenenfalls thermische Behandlung und/oder Politur der in c) erhaltenen Versorgung;
e) Zusammenfügen der Versorgung und eines dentalen Implantats, wobei das dentale Implantat einen enossalen Teil und ein Abutment aufweist, unter Verwendung eines Verbundmaterials.

In einer alternativ bevorzugten Ausführungsform umfasst das Verfahren die folgenden Schritte:
a) Bereitstellen eines Rohlings mit einer Ausnehmung zur Aufnahme eines Implantat-Abutments und einem Kanal, der die Ausnehmung mit einer Außenfläche des Rohlings verbindet;
b) Modellieren der dentalen Versorgung mittels CAD, wobei die äußere Öffnung des Kanals bevorzugt an der oralen Seite der Versorgung zu liegen kommt;
c) Schleifen oder Fräsen der Versorgung aus dem Rohling entsprechend dem Modell aus Schritt b);
d) Gegebenenfalls thermische Behandlung und/oder Politur der in Schritt c) erhaltenen Versorgung;
e) Zusammenfügen der Versorgung und einem dentalen Implantat, wobei das dentale Implantat einen enossalen Teil und ein Abutment aufweist, unter Verwendung eines Verbundmaterials.

In einer bevorzugten Ausführungsform ist die Ausnehmung in der dentalen Versorgung jeweils so ausgestaltet, dass ihre Innenkontur kongruent zur Außenkontur eines Implantat-Abutments ist.

Je nach gewähltem Material kann es erforderlich sein, die erhaltene Versorgung weiteren Bearbeitungsschritten zu unterziehen, die in der Regel dazu dienen, der dentalen Versorgung ihre finale Festigkeit zu verleihen. Daher ist eine Ausführungsform bevorzugt, in der das erfindungsgemäße Verfahren weiterhin eine thermische Behandlung der dentalen Versorgung, vorzugsweise das Sintern der dentalen Versorgung, umfasst.

Um die Oberflächengegebenheiten der dentalen Versorgung weiterhin zu verbessern, kann diese poliert werden. Daher ist eine Ausführungsform bevorzugt, in der die Oberfläche der erhaltenen Versorgung poliert wird.

Ein weiterer Gegenstand der vorliegenden Erfindung ist ein Verfahren zur Herstellung eines erfindungsgemäßen Implantatsystems, vorzugsweise unter Verwendung der erfindungsgemäß hergestellten dentalen Versorgung. Das Verfahren umfasst die folgenden Schritte:
a) Bereitstellen eines Implantats mit einem Abutment;
b) Bereitstellen einer dentalen Versorgung, wobei die dentale Versorgung eine Ausnehmung zur Aufnahme des Abutments und einen Kanal, der die Ausnehmung mit einer Außenfläche der Versorgung verbindet, aufweist;
c) Zusammenfügen der dentalen Versorgung und des Abutments unter Verwendung eines Überschusses an Verbundmaterial;
wobei das überschüssige Verbundmaterial durch den Kanal in der dentalen Versorgung abgeleitet wird.

Bei dem Verbundmaterial handelt es sich vorzugsweise um Dentalkleber oder Dentalzement.

Um einen besseren Verbund zwischen Abutment und dentaler Versorgung zu erreichen, können die Fügestellen entsprechend vorbehandelt werden. Daher ist eine Ausführungsform des erfindungsgemäßen Verfahrens bevorzugt, in der die Fügestellen des Abutments und der dentalen Versorgung vor dem Zusammenfügen einer Oberflächenbehandlung unterzogen werden.

Das erfindungsgemäße Implantatsystem ist insbesondere für den Einsatz in chair-side-Behandlungen vorgesehen. Daher ist ein weiterer Gegenstand der vorliegenden Erfindung ein Kit umfassend ein erfindungsgemäßes Implantatsystem, oder einen erfindungsgemäßen Rohling, und ein Verbundmaterial, vorzugsweise Dentalkleber oder Dentalzement.

Die vorliegende Erfindung wird anhand der folgenden Figuren näher erläutert, wobei diese keinesfalls als Einschränkung des Erfindungsgedanken zu verstehen sind.

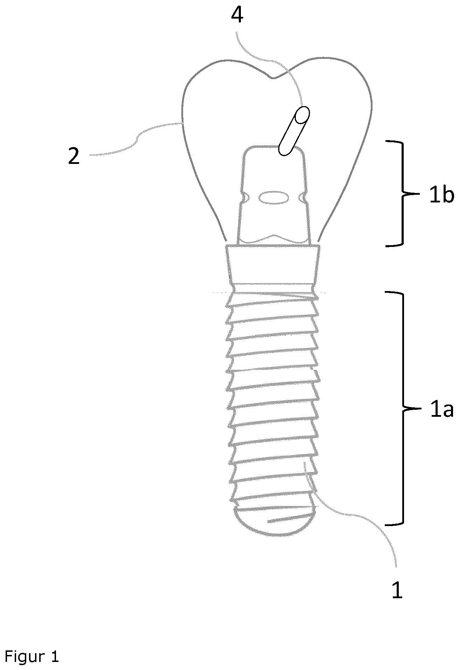

Figur 1 zeigt ein Beispiel des erfindungsgemäßen Implantatsystems, das sich aus einem Implantat (1) mit einem enossalen Teil (1a) und einem Abutment (1b) zusammensetzt, auf das eine dentale Versorgung (2) aufgebracht ist. Die dentale Versorgung enthält einen Kanal (3), der eine Verbindung zu einer Außenfläche der dentalen Versorgung (4) herstellt und zum Abführen überschüssigen Verbundmaterials bei der Befestigung der dentalen Versorgung auf dem Abutment (1b) dient.

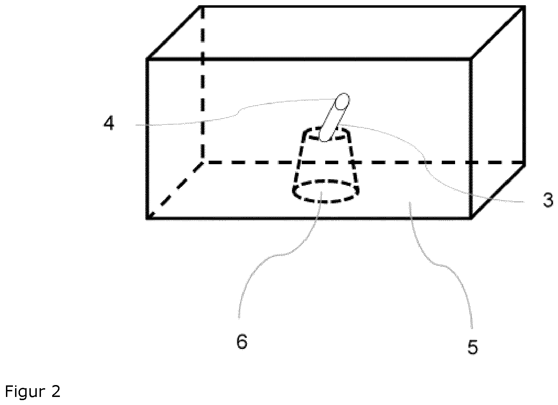

Figur 2 zeigt einen erfindungsgemäßen Rohling (5). Die dentale Versorgung wird aus dem Rohling gefertigt, der eine Ausnehmung (6) zur Aufnahme eines Implantat-Abutments und einen von dieser Ausnehmung ausgehenden Kanal (3) mit einer auf einer Außenfläche des Rohlings (5) mündenden Öffnung (4) aufweist.

## Patentansprüche

1. Dentales Implantatsystem umfassend:
a) ein Implantat mit einem enossalen Teil zur Verankerung in einem Kieferknochen und einem Abutment zur Aufnahme einer dentalen Versorgung; und
b) eine dentale Versorgung mit einer Ausnehmung zur Aufnahme des Abutments,
**dadurch gekennzeichnet, dass** die dentale Versorgung einen maschinell eingebrachten Kanal aufweist, der die Ausnehmung in der dentalen Versorgung mit einer Außenfläche der dentalen Versorgung verbindet.

2. Dentales Implantatsystem gemäß Anspruch 1, **dadurch gekennzeichnet, dass** das Implantatsystem einteilig oder zweiteilig ausgebildet ist.

3. Dentales Implantatsystem gemäß wenigstens einem der vorangehenden Ansprüche, **dadurch gekennzeichnet, dass** der Kanal einen Durchmesser von 0,5 bis 2 mm aufweist, vorzugsweise 0,7 bis 1,0 mm.

4. Dentales Implantatsystem gemäß wenigstens einem der vorangehenden Ansprüche, **dadurch gekennzeichnet, dass** es sich bei dem Kanal um einen innenliegenden Kanal handelt.

5. Dentales Implantatsystem gemäß wenigstens einem der vorangehenden Ansprüche, **dadurch gekennzeichnet, dass** die Öffnung des Kanals oralseitig an der Versorgung angebracht ist.

6. Rohling zur Herstellung einer dentalen Versorgung, wobei der Rohling eine Ausnehmung zur Aufnahme eines Implantat-Abutments aufweist, **dadurch gekennzeichnet, dass** der Rohling einen Kanal aufweist, der die Ausnehmung mit einer Außenfläche des Rohlings verbindet.

7. Rohling gemäß Anspruch 6, **dadurch gekennzeichnet, dass** der Rohling aus einem Material besteht oder dieses umfasst, welches ausgewählt ist aus der Gruppe bestehend aus Feldspatkeramik, Glaskeramik, Zirkoniumoxid, Kunststoff-Keramik-Verbundwerkstoff, Kunststoff und Hybridkeramik.

8. Verfahren zur Herstellung einer dentalen Versorgung umfassend die folgenden Schritte:
i) Erfassen der oralen Situation eines Patienten;
ii-1) Bereitstellen eines Rohling gemäß wenigstens einem der Ansprüche 6 oder 7;
iii-1) Maschinelles Bearbeiten des Rohlings auf Basis der unter i) ermittelten Daten unter Erhalt der dentalen Versorgung;
oder
ii-2) Bereitstellen eines Rohlings zur Herstellung einer dentalen Versorgung;
iii-2) Maschinelles Bearbeiten des Rohlings auf Basis der unter i) ermittelten Daten unter Erhalt der dentalen Versorgung, wobei die dentale Versorgung eine Ausnehmung zur Aufnahme eines Abutments eines Zahnimplantats aufweist und das maschinelle Bearbeiteten das Einbringen eines Kanals in die dentale Versorgung umfasst, der die Ausnehmung mit einer Außenfläche der Versorgung verbindet.

9. Verfahren gemäß Anspruch 8, **dadurch gekennzeichnet, dass** die Bearbeitung des Rohlings mittels CAD/CAM-Verfahren erfolgt.

10. Verfahren gemäß wenigstens einem der Ansprüche 8 oder 9, **dadurch gekennzeichnet, dass** das Verfahren weiterhin eine thermische Behandlung der dentalen Versorgung umfasst.

11. Verfahren zur Herstellung eines dentalen Implantatsystems gemäß wenigstens einem der Ansprüche 1 bis 5, umfassend die Schritte:
a) Bereitstellen eines Implantats mit einem Abutment;
b) Bereitstellen einer dentalen Versorgung;
c) Zusammenfügen der dentalen Versorgung und des Abutments unter Verwendung eines Verbundmaterials,
**dadurch gekennzeichnet, dass** überschüssiges Verbundmaterial durch den Kanal der dentalen Versorgung abgeleitet wird.

12. Verfahren gemäß Anspruch 11, **dadurch gekennzeichnet, dass** das Verbundmaterial ein Dentalkleber oder Dentalzement ist.

13. Verfahren gemäß wenigstens einem der Ansprüche 11 oder 12, **dadurch gekennzeichnet, dass** die Fügestellen des Abutments und der dentalen Versorgung vor dem Zusammenfügen einer Oberflächenbehandlung unterzogen werden.

14. Kit umfassend
a) ein dentales Implantatsystem gemäß wenigstens einem der Ansprüche 1 bis 5 oder einen Rohling gemäß wenigstens einem der Ansprüche 6 oder 7; und
b) ein Verbundmaterial, vorzugsweise Dentalkleber oder Dentalzement.
